# EUROPEAN PATENT APPLICATION

(11) **EP 4 644 734 A1**
(43) Date of publication of application: **05.11.2025**
(21) Application number: 23912082.7
(22) Date of filing: 25.12.2023
(51) Int. Cl.: F16J 15/34, F16C 17/04

(54) **SLIDING COMPONENT**

(30) Priority: 26.12.2022 JP 2022208341
(71) Applicant: Eagle Industry Co., Ltd., Minato-ku Tokyo 105-8587 (JP)
(72) Inventor: SUZUKI, Hiroshi, Tokyo 105-8587 (JP); UCHIDA, Kenta, Tokyo 105-8587 (JP); FUKUDA, Shogo, Tokyo 105-8587 (JP); OU, Iwa, Tokyo 105-8587 (JP); IMURA, Tadatsugu, Tokyo 105-8587 (JP); OKADA, Tetsuzo, Tokyo 105-8587 (JP); KONDO, Masahiro, Tokyo 105-8587 (JP)
(74) Representative: WSL Patentanwälte Partnerschaft mbB
(86) International application number: PCT/JP2023/046513
(87) International publication number: WO 2024/143303

(57) **Abstract**

There are provided sliding components capable of enhancing lubrication. In sliding components 10 and 20 of which a pair of sliding surfaces 11 and 21 rotate relative to each other and which partition a sealed fluid space S1 and a leakage space S2 off from each other, the sliding surface 11 is provided with a dynamic pressure generation groove 13 and a fluid recovery groove 12 including a pressure generation portion 17 that is a circumferential end portion, a curved portion, or a bent portion on a downstream side in a relative rotation direction, and the fluid recovery groove 12 includes a first groove portion 15 overlapping the dynamic pressure generation groove 13 in a radial direction on a leakage space S2 side of the dynamic pressure generation groove 13, and a second groove portion 16 overlapping the dynamic pressure generation groove 13 in a circumferential direction on the downstream side of the dynamic pressure generation groove 13 in the relative rotation.

## Description

### {TECHNICAL FIELD}

The present invention relates to sliding components, for example, sliding components that rotate relative to each other, for example, sliding components used in a shaft sealing device that seals a rotating shaft of a rotating machine in an automobile, a general industrial machine, or other seal fields, or sliding components used in a bearing of a machine in an automobile, a general industrial machine, or other bearing fields.

### {BACKGROUND ART}

For example, a mechanical seal serving as a shaft sealing device that prevents leakage of a sealed fluid includes a pair of annular sliding components which rotate relative to each other and of which sliding surfaces slide on each other. In such a mechanical seal, in recent years, reducing the loss of energy due to sliding has been desired for environmental measures and the like.

For example, in a mechanical seal as described in Patent Citation 1, a plurality of dimples are provided in a circumferential direction on a sliding surface of a stationary seal ring. The dimple is formed in a crank shape including a cavitation formation region and a positive pressure generation region. The cavitation formation region is disposed on a low-pressure fluid side, and is formed in a groove shape extending in the circumferential direction. The positive pressure generation region is disposed on a high-pressure fluid side, and is formed in a groove shape extending in the circumferential direction. In addition, a downstream end of the cavitation formation region in a rotation direction and an upstream end of the positive pressure generation region in the rotation direction communicate with each other.

As a rotating seal ring rotates, the dimple guides a sealed fluid from the cavitation formation region on an upstream side in the rotation direction to the positive pressure generation region on a downstream side in the rotation direction, and generates positive pressure at the downstream end. Since a mating sliding surface floats due to the positive pressure and the sealed fluid is introduced into a gap between the sliding surfaces, the loss of energy due to sliding can be reduced. In addition, the dimple can recover the sealed fluid that has moved to a low-pressure space side, due to the negative pressure generated at the upstream end of the cavitation formation region in the rotation direction.

### {CITATION LIST}

### {Patent Literature}

Patent Citation 1: JP 6058018 B2 (Pages 7 and 8, FIG. 4)

### {SUMMARY OF INVENTION}

### {Technical Problem}

In such sliding components as in Patent Citation 1, since the positive pressure generation region of the dimple is disposed close to a sealed fluid space, a part of the sealed fluid can be recovered on the high-pressure fluid side. However, the positive pressure generation regions of the dimples are disposed to be distributed in the circumferential direction. As a result, since the positive pressure generated in the circumferential direction between the sliding surfaces becomes uneven, a floating balance is difficult to achieve, so that lubrication is impaired, which is a risk.

The present invention has been made in view of such problems, and an object of the present invention is to provide sliding components capable of enhancing lubrication.

### {Solution to Problem}

In order to solve the foregoing problems, sliding components according to the present invention are sliding components of which a pair of sliding surfaces rotate relative to each other and which partition a sealed fluid space and a leakage space off from each other. At least one of the sliding surfaces is provided with a dynamic pressure generation groove and a fluid recovery groove including a pressure generation portion that is a circumferential end portion, a curved portion, or a bent portion on a downstream side in a relative rotation direction. The fluid recovery groove includes a first groove portion overlapping the dynamic pressure generation groove in a radial direction on a leakage space side of the dynamic pressure generation groove, and a second groove portion overlapping the dynamic pressure generation groove in a circumferential direction on the downstream side of the dynamic pressure generation groove in the relative rotation. According to the aforesaid feature of the present invention, since positive pressure can be generated not only in the dynamic pressure generation groove but also in the fluid recovery groove, a larger dynamic pressure can be generated, a sealed fluid that attempts to flow out from the dynamic pressure generation groove and to flow to a leakage side is recovered by the first groove portion of the fluid recovery groove, and the excess sealed fluid on the sliding surface, which may lead to leakage, is recovered by the second groove portion located on the downstream side, and is returned to a sealed fluid space side. _Accordingly, leakage can be suppressed, and dynamic pressure can also be generated in the fluid recovery groove. The floating balance between the sliding components can be improved due to positive pressure being generated at a plurality of locations by the dynamic pressure generation groove and the fluid recovery groove, so that lubrication can be enhanced.

It may be preferable that the pressure generation portion is a bent portion formed between the first groove portion and the second groove portion curved or bent from the first groove portion and extending toward a sealed fluid space side in the radial direction. According to this preferable configuration, positive pressure can be generated at the bent portion between the first groove portion and the second groove portion, and the fluid in the fluid recovery groove can be guided toward the sealed fluid space side.

It may be preferable that the fluid recovery groove overlaps a plurality of the dynamic pressure generation grooves in the radial direction. According to this preferable configuration, positive pressure can be reliably generated at a plurality of locations. In addition, leakage of the sealed fluid to the leakage side can be more reliably prevented.

It may be preferable that the second groove portion is inclined in a direction opposite to the dynamic pressure generation groove from the sealed fluid space to the leakage space. According to this preferable configuration, the second groove portion can guide the sealed fluid to the sealed fluid space side. Accordingly, the fluid recovery groove can contribute to preventing leakage.

It may be preferable that an upstream end of the first groove portion of the fluid recovery groove and the bent portion of an adjacent fluid recovery groove on an upstream side in the relative rotation overlap each other in the circumferential direction. According to this preferable configuration, the fluid recovery groove can efficiently recover the sealed fluid that has flowed into a gap between the sliding surfaces from the pressure generation portion of the adjacent fluid recovery groove on the upstream side in the relative rotation.

It may be preferable that the adjacent first groove portions are aligned in one circle line. According to this preferable configuration, the first groove portions can guide the sealed fluid along the rotation direction. In addition, the sealed fluid that has flowed into the gap between the sliding surfaces from the pressure generation portion of the adjacent fluid recovery groove on the upstream side in the relative rotation is also easily moved along the rotation direction. Accordingly, the sliding components can evenly recover the sealed fluid.

It may be preferable that the first groove portion of the fluid recovery groove and the second groove portion of an adjacent fluid recovery groove on an upstream side in the relative rotation overlap each other in the radial direction, and the dynamic pressure generation groove is surrounded by the fluid recovery groove and the second groove portion of the adjacent fluid recovery groove on the upstream side in the relative rotation. According to this preferable configuration, in addition to improving the floating balance between the sliding components, the sealed fluid that has flowed into the gap between the sliding surfaces from each of the dynamic pressure generation grooves or the pressure generation portion of each of the fluid recovery grooves can be recovered and reliably prevented from leaking in the radial direction. Further, since the sealed fluid recovered by the fluid recovery grooves can be discharged into the sealed fluid space from a plurality of locations in the circumferential direction, not only can the stagnation of the deteriorated sealed fluid between the sliding surfaces be suppressed, but the accumulation of contamination or the like can also be prevented.

### {BRIEF DESCRIPTION OF DRAWINGS}

FIG. 1 is a longitudinal sectional view illustrating one example of a mechanical seal including sliding components according to a first embodiment of the present invention.
FIG. 2 is a view of a sliding surface of a stationary seal ring in the first embodiment when viewed in an axial direction.
FIG. 3 is a partially enlarged view of FIG. 2.
FIG. 4 is an enlarged view of a modification example of the sliding surface of the stationary seal ring in the first embodiment when viewed in the axial direction.
FIG. 5 is an enlarged view of another modification example of the sliding surface of the stationary seal ring in the first embodiment when viewed in the axial direction.
FIG. 6 is an enlarged view of a sliding surface of a stationary seal ring as one of sliding components according to a second embodiment of the present invention when viewed in the axial direction.
FIG. 7 is an enlarged view of a modification example of the sliding surface of the stationary seal ring in the second embodiment when viewed in the axial direction.
FIG. 8 is an enlarged view of a sliding surface of a stationary seal ring as one of sliding components according to a third embodiment of the present invention when viewed in the axial direction.
FIG. 9 is an enlarged view of a sliding surface of a stationary seal ring as one of sliding components according to a fourth embodiment of the present invention when viewed in the axial direction.
FIG. 10 is an enlarged view of a sliding surface of a stationary seal ring as one of sliding components according to a fifth embodiment of the present invention when viewed in the axial direction.
FIG. 11 is an enlarged view of a sliding surface of a stationary seal ring as one of sliding components according to a sixth embodiment of the present invention when viewed in the axial direction.
FIG. 12 is an enlarged view of a modification example of the sliding surface of the stationary seal ring in the sixth embodiment when viewed in the axial direction.
FIG. 13 is an enlarged view of a sliding surface of a stationary seal ring as one of sliding components according to a seventh embodiment of the present invention when viewed in the axial direction.
FIG. 14 is a view of a sliding surface of a stationary seal ring as one of sliding components according to an eighth embodiment of the present invention when viewed in the axial direction.
FIG. 15 is a view of a sliding surface of a stationary seal ring as one of sliding components according to a ninth embodiment of the present invention when viewed in the axial direction.
FIG. 16 is an enlarged view of a sliding surface of a stationary seal ring as one of sliding components according to a tenth embodiment of the present invention when viewed in the axial direction.
FIG. 17 is an enlarged view of a sliding surface of a stationary seal ring as one of sliding components according to an eleventh embodiment of the present invention when viewed in the axial direction.
FIG. 18 is a view of a sliding surface of a stationary seal ring as one of sliding components according to a twelfth embodiment of the present invention when viewed in the axial direction.
FIG. 19 is an enlarged view of a sliding surface of a stationary seal ring as one of sliding components according to a thirteenth embodiment of the present invention when viewed in the axial direction.

### {DESCRIPTION OF EMBODIMENTS}

Modes for implementing sliding components according to the present invention will be described below based on embodiments.

### {First embodiment}

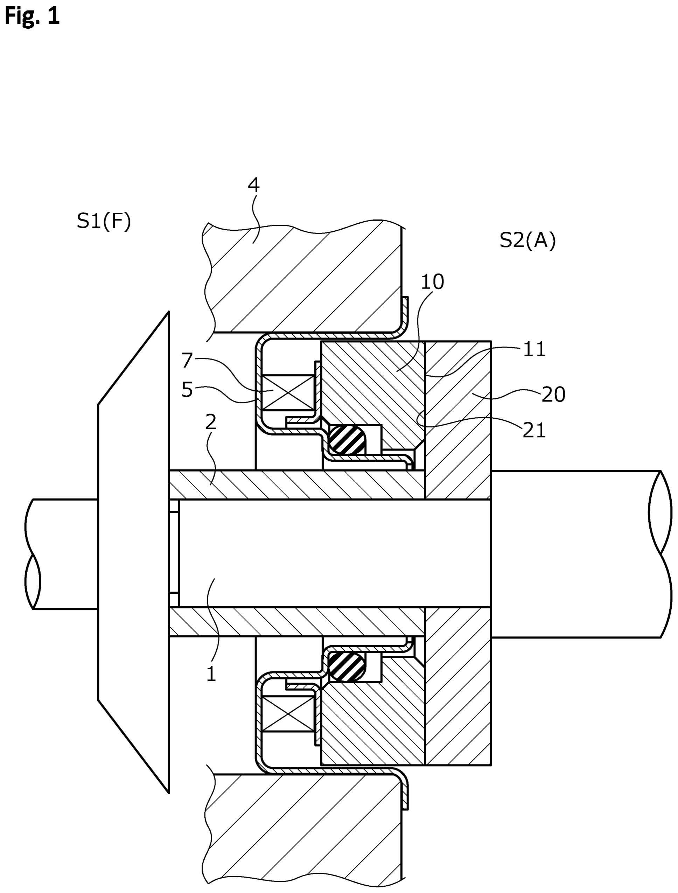

Sliding components according to a first embodiment of the present invention will be described with reference to FIGS. 1 to 5. Incidentally, in the present embodiment, a mode in which the sliding components are applied to a mechanical seal will be described as an example.

In addition, in the mechanical seal, a sealed fluid F serving as a first fluid and atmosphere A serving as a second fluid will be described as existing in an inner space S1 and an outer space S2, respectively, and a radial inner side and a radial outer side of the sliding components constituting the mechanical seal will be described as a sealed fluid space side (high-pressure side) and a leakage space side (low-pressure side), respectively. In addition, for convenience of description, in the drawings, dots may be added to grooves and the like formed on a sliding surface.

A mechanical seal illustrated in FIG. 1 is an outside mechanical seal that seals the sealed fluid F attempting to leak from the radial inner side toward the radial outer side of sliding surfaces, and that allows the outer space S2 to communicate with the atmosphere A. Incidentally, in the present embodiment, a mode in which the sealed fluid F is a high-pressure liquid and the atmosphere A is a gas having a lower pressure than the sealed fluid F will be provided as an example.

The mechanical seal is mainly composed of a stationary seal ring 10 serving as a sliding component having an annular shape, and a rotating seal ring 20 serving as another sliding component having an annular shape. The rotating seal ring 20 is provided on a rotating shaft 1 via a sleeve 2 to be rotatable together with the rotating shaft 1. The stationary seal ring 10 is provided on a seal cover 5, which is fixed to a housing 4 of an attached device, to be non-rotatable and movable in an axial direction. The stationary seal ring 10 is biased in the axial direction by an elastic member 7, and a sliding surface 11 of the stationary seal ring 10 and a sliding surface 21 of the rotating seal ring 20 slide in close contact with each other. Incidentally, the sliding surface 21 of the rotating seal ring 20 is a flat surface, and a recessed portion such as a groove is not provided on the flat surface.

The stationary seal ring 10 and the rotating seal ring 20 are typically made of SiC (as an example of hard material) or a combination of SiC and carbon (as an example of soft material), but are not limited thereto, and any sliding material can be applied as long as the sliding material is used as a sliding material for a mechanical seal. Incidentally, examples of SiC include sintered bodies using boron, aluminum, carbon, or the like as a sintering aid, and materials consisting of two or more phases with different components and compositions, such as SiC in which graphite particles are dispersed, reaction-sintered SiC consisting of SiC and Si, SiC-TiC, and SiC-TiN. As the carbon, carbon in which a carbonaceous substance and a graphitic substance are mixed, resin-molded carbon, sintered carbon, and the like can be used. In addition, in addition to the above-described sliding materials, metal materials, resin materials, surface modification materials (e.g., coating materials), composite materials, and the like can also be applied.

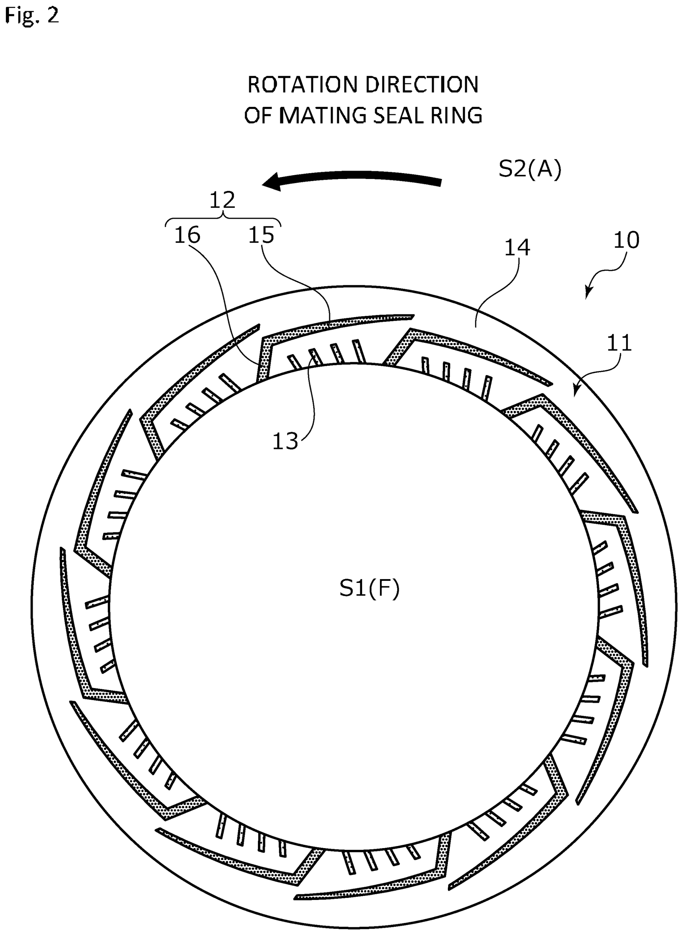

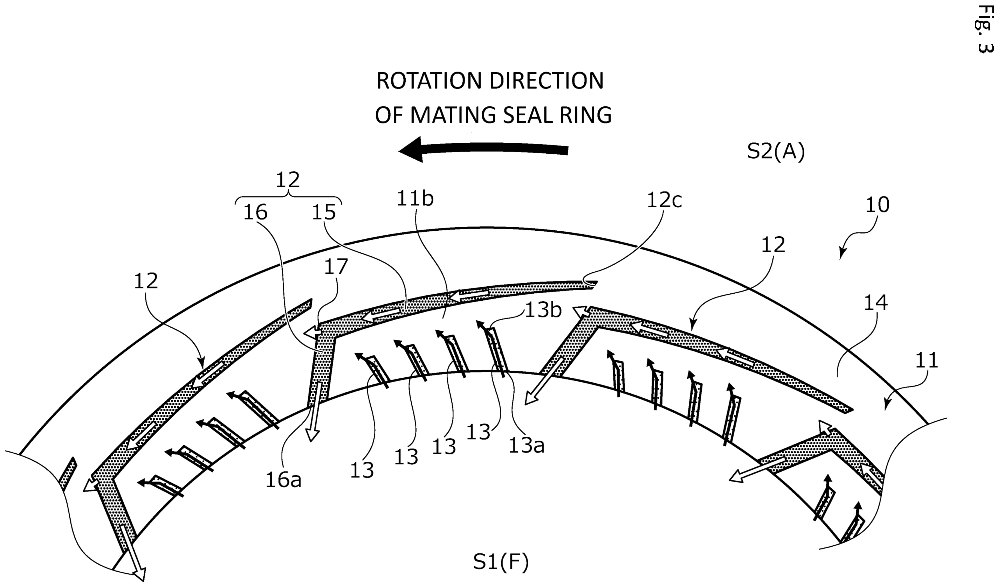

As illustrated in FIGS. 2 and 3, the rotating seal ring 20 that is a mating seal ring slides counterclockwise relative to the stationary seal ring 10 as indicated by a solid arrow.

A plurality of pumping grooves 12 (12 locations in the present embodiment) serving as fluid recovery grooves and a plurality of dynamic pressure grooves 13 (one set of four being located at each of 12 locations in the present embodiment) serving as dynamic pressure generation grooves are formed on the sliding surface 11 of the stationary seal ring 10. In addition, a portion of the sliding surface 11 other than the pumping grooves 12 and the dynamic pressure grooves 13 is a land 14 forming a flat surface.

The pumping groove 12 is a groove having a substantially L-shape with an obtuse interior angle and a substantially constant depth, and including a circumferential groove 15 serving as a first groove portion and an inclined groove 16 serving as a second groove portion. Incidentally, the cross-sectional shape of the pumping groove 12 is a rectangular shape, but may be a U-shape, a semicircular shape, or a triangular shape, and may be changed as appropriate. The same applies to the dynamic pressure groove 13.

In more detail, as illustrated in FIG. 3, the circumferential groove 15 extends in an arc shape in a circumferential direction while being inclined to the radial inner side from an upstream side in a rotation direction of the rotating seal ring 20 toward a downstream side in the rotation direction, namely, from the upstream side toward the downstream side in the relative rotation direction. The circumferential groove 15 has a circumferential component larger than a radial component. Incidentally, it is preferable that the circumferential groove 15 has at least a circumferential component. Namely, in the present invention, it is preferable that the circumferential direction includes at least a circumferential component.

In addition, the circumferential groove 15 has a groove width that gradually increases as the circumferential groove 15 extends from the upstream side in the rotation direction of the rotating seal ring 20 toward the downstream side in the rotation direction. An end portion 12c of the circumferential groove 15 on the upstream side in the rotation direction of the rotating seal ring 20 is closed. An end portion of the circumferential groove 15 on the downstream side in the rotation direction of the rotating seal ring 20 communicates with the inclined groove 16.

The inclined groove 16 extends substantially linearly from the end portion of the circumferential groove 15 on the downstream side in the rotation direction of the rotating seal ring 20 toward the radial inner side while being inclined to the downstream side in the rotation direction of the rotating seal ring 20. In other words, the inclined groove 16 is inclined in a direction opposite to the dynamic pressure grooves 13. The inclined groove 16 has a radial component larger than a circumferential component. Incidentally, it is preferable that the inclined groove 16 has at least a radial component. Namely, in the present invention, it is preferable that a radial direction includes at least a radial component. In addition, the inclined groove 16 has a smaller circumferential component and a larger radial component than the circumferential groove 15.

The inclined groove 16 is bent from the circumferential groove 15 at an obtuse angle, and extends toward the inner space S1. In addition, a radial inner end 16a of the inclined groove 16 communicates with the inner space S1. A bent portion 17 having a bent shape and serving as a pressure generation portion is formed at a connecting portion between the circumferential groove 15 and the inclined groove 16. In other words, the bent portion 17 is a portion where the curvature of the pumping groove 12 changes, and is a bent portion of the pumping groove 12 on the downstream side in the relative rotation direction.

In addition, four dynamic pressure grooves 13 are formed on the radial inner side defined by the pumping groove 12, namely, in a region 11b on a sealed fluid F side. In addition, the depth of the dynamic pressure grooves 13 is substantially constant. Further, among the four dynamic pressure grooves 13, the farther the dynamic pressure groove 13 is located on the upstream side in the rotation direction of the rotating seal ring 20 with respect to an inclined groove 16 side of the pumping groove 12, the longer the dimension from a radial inner end 13a to a radial outer end 13b becomes.

In more detail, each of the dynamic pressure grooves 13 extends linearly from the radial inner end 13a to the radial outer end 13b toward the downstream side in the rotation direction of the rotating seal ring 20. The radial inner end 13a of the dynamic pressure groove 13 communicates with the inner space S1, and the radial outer end 13b serving as a dynamic pressure generation portion is closed. Incidentally, the dynamic pressure groove 13 is not limited to having a linear shape, and may have an arc shape when viewed in the axial direction.

Next, the operation of the stationary seal ring 10 and the rotating seal ring 20 during relative rotation will be described with reference to FIG. 3.

When the rotating seal ring 20 rotates, as illustrated by solid thin arrows in FIG. 3, the sealed fluid F in each of the dynamic pressure grooves 13 attempts to move in accordance with the rotation direction of the rotating seal ring 20 due to shear with the sliding surface 21. At that time, the sealed fluid F is guided along the dynamic pressure groove 13, flows into a gap between the sliding surfaces 11 and 21 from the radial outer end 13b and the vicinity thereof, so that positive pressure is generated.

In addition, when the rotating seal ring 20 rotates, as illustrated by hollow arrows in FIG. 3, the sealed fluid F in the circumferential groove 15 of the pumping groove 12 moves in accordance with the rotation direction of the rotating seal ring 20 due to shear with the sliding surface 21, is guided along the circumferential groove 15 toward the inclined groove 16 side, is guided along the inclined groove 16, and is discharged from the radial inner end 16a into the inner space S1.

In addition, when the sealed fluid F flows into the inclined groove 16 from the circumferential groove 15, the flow direction of the sealed fluid F is rapidly changed toward the radial inner side with respect to a flow direction up to that point by the bent portion 17. At this time, a part of the sealed fluid F fails to keep up with the change in the flow direction, flows into the gap between the sliding surfaces 11 and 21 from the bent portion 17 and the vicinity thereof, so that positive pressure is generated.

Meanwhile, a relative negative pressure is generated in the pumping groove 12. The closer the location is to the end portion 12c of the circumferential groove 15, the larger the negative pressure becomes. Namely, the force that suctions the sealed fluid F becomes stronger.

In addition, the circumferential groove 15 is disposed on an outer space S2 side, namely, on a leakage side with respect to the radial outer end 13b and the vicinity thereof where positive pressure is generated in each of the dynamic pressure grooves 13. In addition, the circumferential groove 15 extends in the circumferential direction to block the movement of the sealed fluid F, which has flowed into the gap between the sliding surfaces 11 and 21 from each of the dynamic pressure grooves 13, toward the outer space S2 side. In other words, the locations where positive pressure is generated in the circumferential groove 15 and each of the dynamic pressure grooves 13 are formed at positions overlapping each other when viewed in the radial direction. In such a manner, being disposed at positions overlapping each other when viewed in the radial direction is referred to as overlapping in the radial direction in the present invention. Similarly, being disposed at positions overlapping each other when viewed in the circumferential direction is referred to as overlapping in the circumferential direction in the present invention.

Accordingly, most of the sealed fluid F that has flowed into the gap between the sliding surfaces 11 and 21 from each of the dynamic pressure grooves 13 is recovered by the circumferential groove 15.

In addition, the sealed fluid F that has not been recovered by the circumferential groove 15 also moves in accordance with the rotation direction of the rotating seal ring 20 due to shear with the sliding surface 21, and is discharged into the inner space S1, together with the sealed fluid F guided along the inclined groove 16.

In addition, the end portion 12c of the circumferential groove 15 is disposed on the outer space S2 side with respect to the bent portion 17 of the adjacent pumping groove 12 on the upstream side in the rotation direction of the rotating seal ring 20, and overlaps the bent portion 17 in the radial direction. Therefore, the sealed fluid F that has flowed into the gap between the sliding surfaces 11 and 21 from the bent portion 17 of the circumferential groove 15 on the upstream side and the vicinity of the bent portion 17 is also recovered in the pumping groove 12 located on the downstream side in the rotation direction.

As described above, the stationary seal ring 10 of the present embodiment can generate positive pressure not only in each of the dynamic pressure grooves 13 but also in the pumping groove 12. As a result, the stationary seal ring 10 can generate a larger dynamic pressure. In addition, the stationary seal ring 10 can recover the sealed fluid F, which attempts to flow out from the dynamic pressure grooves 13 and to flow out to the outer space S2 side, using the circumferential groove 15 of the pumping groove 12. Further, the stationary seal ring 10 recovers the excess sealed fluid F between the sliding surfaces 11 and 21, which may lead to leakage, using the inclined groove 16 located on the downstream side, and returns the excess sealed fluid F to the inner space S1 side. Accordingly, leakage can be suppressed, and dynamic pressure can also be generated in the pumping groove 12.

In addition, the stationary seal ring 10 can improve the floating balance with the rotating seal ring 20 by generating positive pressure at a plurality of locations, so that lubrication is enhanced.

In addition, the bent portion 17 of the pumping groove 12 is located between two sets of the adjacent dynamic pressure grooves 13 in the circumferential direction and on the radial outer side with respect to each of the dynamic pressure grooves 13. As a result, the stationary seal ring 10 can generate positive pressure between the sliding surfaces 11 and 21 in a well-balanced manner.

In addition, since the pumping groove 12 overlaps the dynamic pressure grooves 13 in the radial direction, the sealed fluid F flowing from the dynamic pressure grooves 13 toward the outer space S2 side is easily recovered in the pumping groove 12.

In addition, one pumping groove 12 overlaps the four dynamic pressure grooves 13 in the radial direction. Therefore, the stationary seal ring 10 can reliably generate positive pressure at a plurality of locations. In addition, leakage of the sealed fluid F to the outer space S2 side can be more reliably prevented.

Further, in the four dynamic pressure grooves 13 constituting one set, the radial positions of the radial outer ends 13b are different. In more detail, the radial outer ends 13b of the four dynamic pressure grooves 13 are gradually located from the radial outer side to the radial inner side from the upstream side toward the downstream side in the relative rotation direction. Accordingly, dynamic pressure can be generated at different positions in the radial direction. As a result, the stationary seal ring 10 can further improve the floating balance with the rotating seal ring 20.

Incidentally, the number of the dynamic pressure grooves in one set may be one, or may be a plural number other than four, and may be changed as appropriate.

In addition, since the inclined groove 16 of the pumping groove 12 is inclined from the inner space S1 toward the outer space S2 in the direction opposite to the dynamic pressure grooves 13, the sealed fluid F can be guided to the inner space S1 side during relative rotation. Accordingly, the pumping groove 12 can contribute to preventing leakage.

In addition, one set of the dynamic pressure grooves 13 is surrounded by the pumping groove 12 overlapping the one set of dynamic pressure grooves 13 in the radial direction and the circumferential direction, and the inclined groove 16 of the pumping groove 12 adjacent to the pumping groove 12 on the upstream side in the rotation direction of the rotating seal ring 20.

According to this configuration, the stationary seal ring 10 can recover the sealed fluid F that has flowed into the gap between the sliding surfaces 11 and 21 from each of the dynamic pressure grooves 13 or the bent portion 17 of each of the pumping grooves 12, in addition to improving the floating balance with the rotating seal ring 20, so that the sealed fluid F can be reliably prevented from leaking in the radial direction.

Further, since the sealed fluid F recovered by the pumping grooves 12 can be discharged into the inner space S1 from a plurality of locations in the circumferential direction, not only can the stagnation of the deteriorated sealed fluid F between the sliding surfaces 11 and 21 be suppressed, but the accumulation of contamination or the like can also be prevented.

In addition, the width of the circumferential groove 15 is increased as the circumferential groove 15 extends from the upstream side toward the downstream side in the rotation direction of the rotating seal ring 20. Accordingly, the pumping grooves 12 easily generate relative negative pressure in the circumferential groove 15.

In addition, the circumferential groove 15 has the closed end on the upstream side in the rotation direction of the rotating seal ring 20, and is disposed on the outer space S2 side, namely, on the leakage side. As described above, the closer the location is to the upstream side in the rotation direction of the rotating seal ring 20, the larger the relative negative pressure generated in the circumferential groove 15 becomes. Therefore, the circumferential groove 15 can recover the sealed fluid F that has moved further toward the outer space S2 side from the pumping groove 12 located on the upstream side in the rotation direction of the rotating seal ring 20.

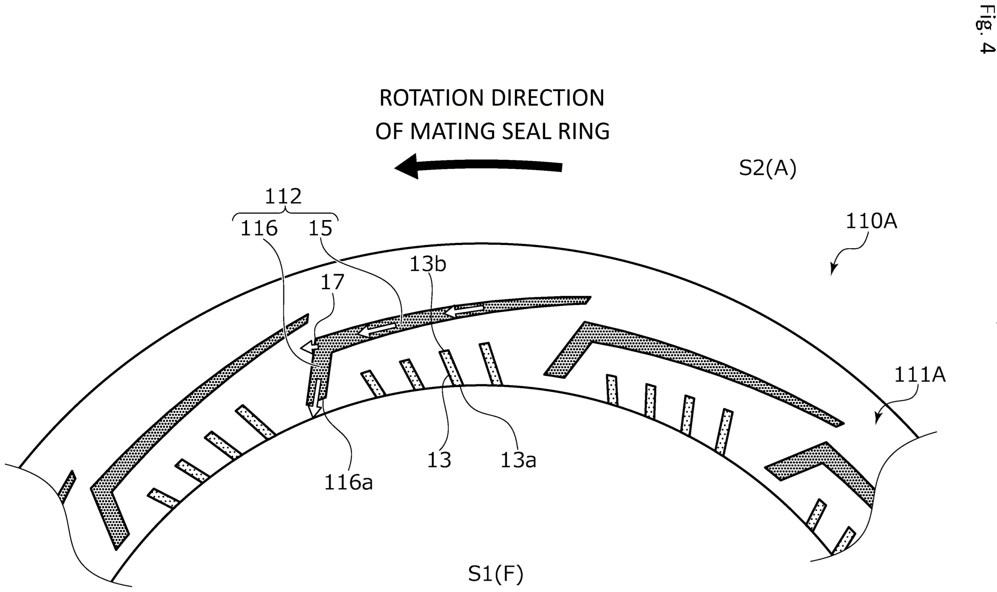

Incidentally, in the present embodiment, the configuration in which the inclined groove 16 of the pumping groove 12 communicates with the inner space S1 has been described; however, the present invention is not limited thereto, and referring to FIG. 4 illustrating a modification example, as in an inclined groove 116 of a pumping groove 112 of a stationary seal ring 110A, a radial inner end 116a on the downstream side in the rotation direction of the rotating seal ring 20 may be closed.

In such a configuration, the sealed fluid F flows into a gap between sliding surfaces 111A and 21 from the radial inner end 116a on the downstream side in the rotation direction of the rotating seal ring 20, so that positive pressure can be generated at the radial inner end 116a and in the vicinity thereof. In such a manner, the radial inner end 116a of the inclined groove 116 functions as another pressure generation portion of the pumping groove 112.

In addition, in FIG. 4, the radial inner end 116a is located between two sets of the adjacent dynamic pressure grooves 13 in the circumferential direction and on the radial inner side with respect to the radial outer end 13b of each of the dynamic pressure grooves 13. As a result, positive pressure can be generated between the sliding surfaces 111A and 21 in a well-balanced manner.

In addition, in FIG. 4, the pumping groove 112 can discharge a part of the sealed fluid F, which has flowed into the gap between the sliding surfaces 111A and 21 from the radial inner end 116a on the downstream side in the rotation direction of the rotating seal ring 20, into the inner space S1.

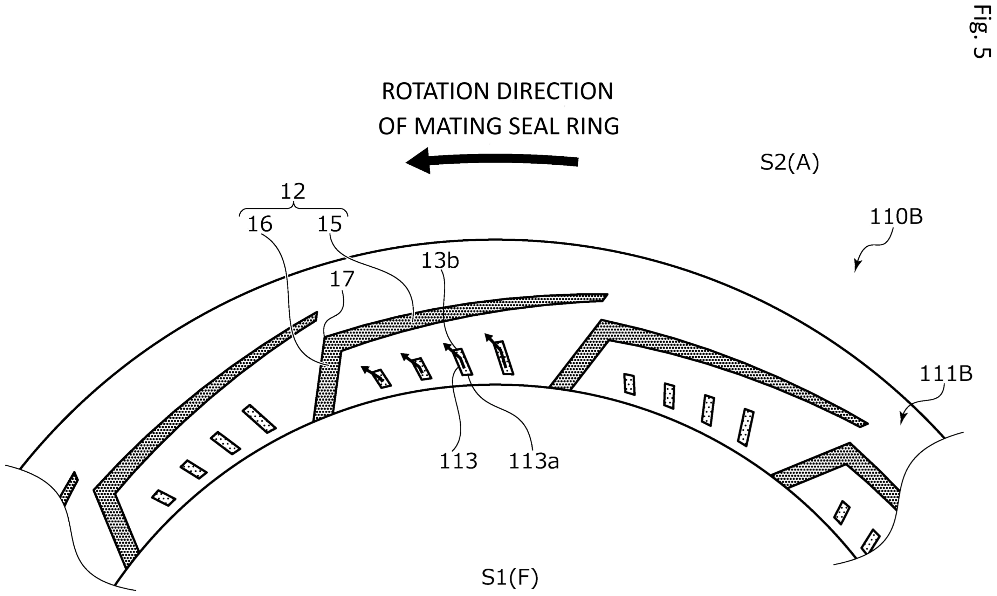

In addition, in the present embodiment, the configuration in which the dynamic pressure grooves 13 communicate with the inner space S1 has been described; however, the present invention is not limited thereto, and referring to FIG. 5 illustrating another modification example, as in a dynamic pressure groove 113 of a stationary seal ring 110B, an end 113a on the upstream side in the rotation direction may be closed.

In such a configuration as well, the sealed fluid F flowing into the dynamic pressure groove 113 moves from the end 113a on the upstream side in the rotation direction toward the downstream side, and flows into a gap between sliding surfaces 111B and 21, so that dynamic pressure can be generated. In addition, the sealed fluid F can be introduced from the inner space S1 by the negative pressure generated at the end 113a of the dynamic pressure groove 113 on the upstream side in the rotation direction.

In addition, in the present embodiment, the dynamic pressure groove 13 has been provided as an example of the dynamic pressure generation groove; however, the present invention is not limited thereto, and the dynamic pressure generation groove may be, for example, a bent groove, a Rayleigh step, a spiral groove, or grooves or dimples having various shapes such as a herringbone shape as long as the dynamic pressure generation groove can generate positive pressure, and the structure of the dynamic pressure generation groove may be changed as appropriate.

### {Second embodiment}

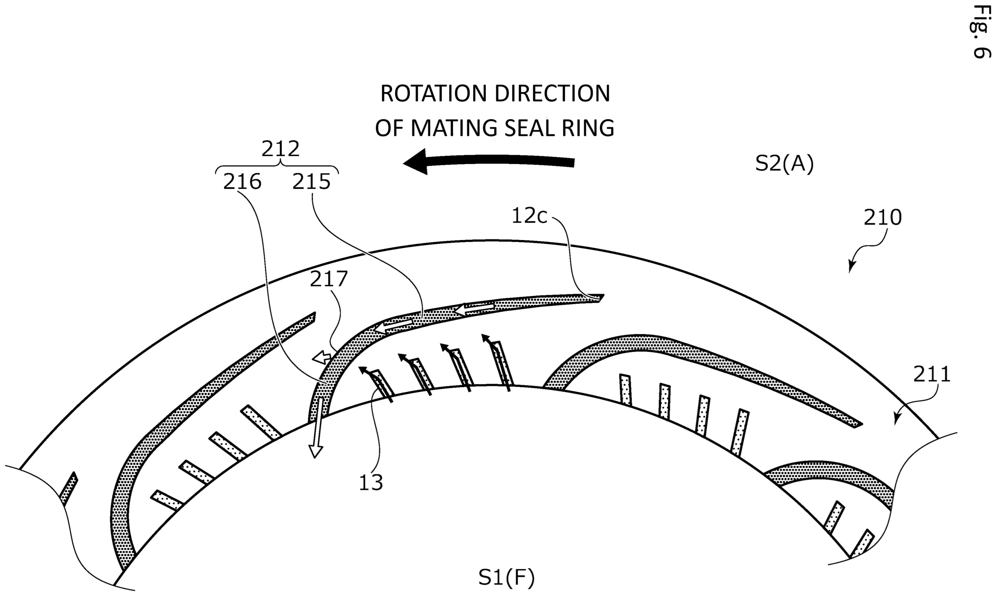

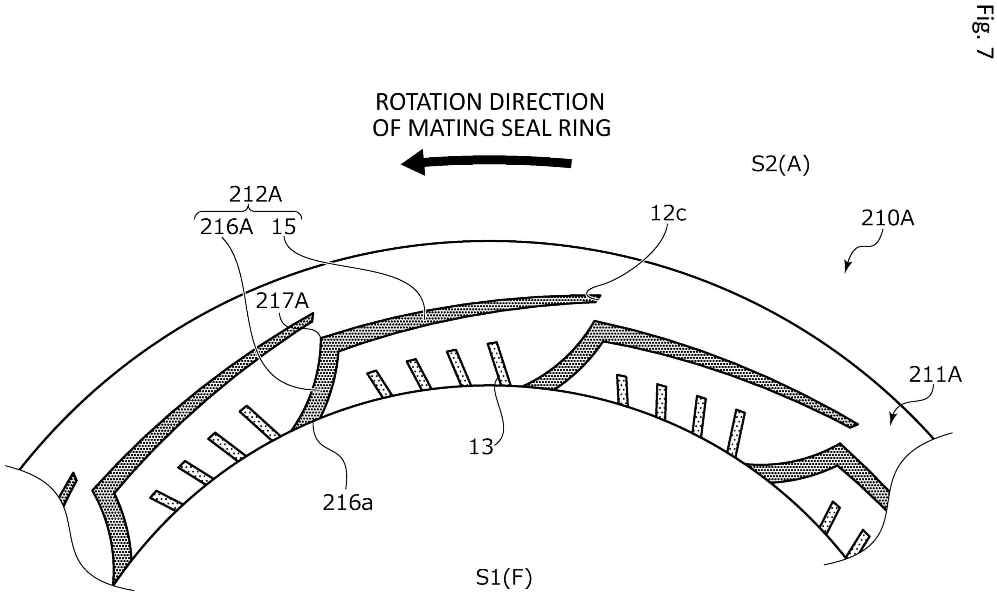

Next, sliding components according to a second embodiment of the present invention will be described with reference to FIGS. 6 and 7. Incidentally, the description of configurations that are the same as and overlap with the configurations of the first embodiment will be omitted.

A plurality of pumping grooves 212 and a plurality of the dynamic pressure grooves 13 are formed on a sliding surface 211 of a stationary seal ring 210 as one of the sliding components according to the second embodiment.

The pumping groove 212 includes a circumferential groove 215 and a curved inclined groove 216.

The curved inclined groove 216 extends in an arc shape with a small curvature from a downstream end portion of the circumferential groove 215 in the rotation direction of the rotating seal ring 20 toward the inner space S1 so as to be convex toward the radial outer side. Accordingly, a bent portion 217 of the curved inclined groove 216 is formed more gently than the bent portion 17 of the first embodiment. Namely, the bent portion 217 has a curved shape. In other words, the bent portion 217 is a portion where the curvature of the curved inclined groove 216 changes, and is a curved portion of the pumping groove 212 on the downstream side in the relative rotation direction.

According to this configuration, the pumping groove 212 of the present embodiment further suppresses the generation of positive pressure at the bent portion 217, and more easily discharges the recovered fluid into the inner space S1, compared to the pumping groove 12 of the first embodiment.

Incidentally, referring to FIG. 7 illustrating a modification example, as in a pumping groove 212A of a stationary seal ring 210A, a curved inclined groove 216A may extend in an arc shape from the end portion of the circumferential groove 15 on the downstream side in the rotation direction of the rotating seal ring 20 toward the inner space S1 so as to be convex toward the radial inner side. Accordingly, a bent portion 217A of the pumping groove 212A is formed at a more acute angle than the bent portion 17 of the first embodiment.

According to this configuration, in the pumping groove 212A, the positive pressure generated at the bent portion 217A is higher and the flow rate returning into the inner space S1 is smaller compared to the pumping groove 12 of the first embodiment.

### {Third embodiment}

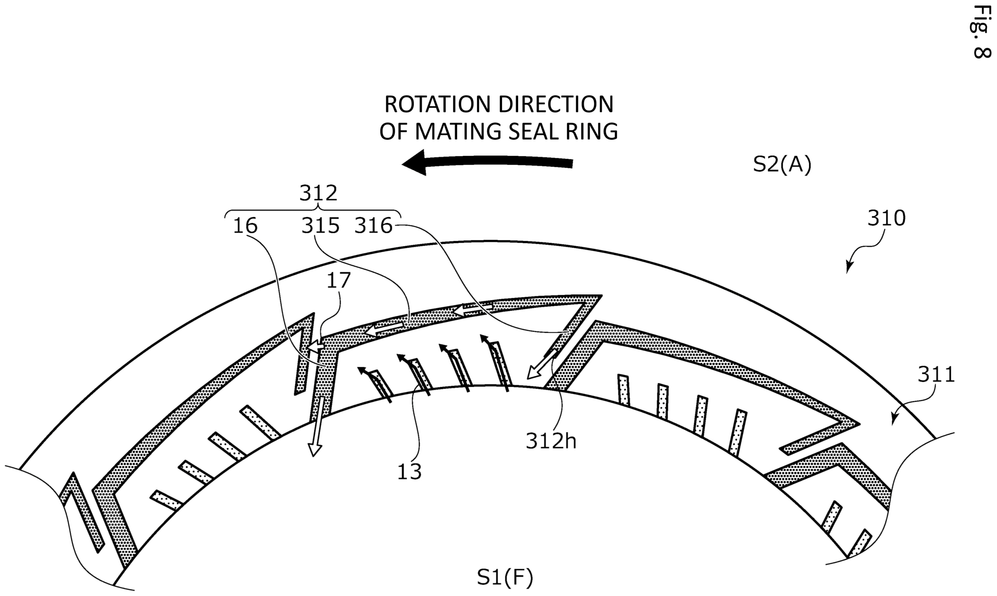

Next, sliding components according to a third embodiment of the present invention will be described with reference to FIG. 8. Incidentally, the description of configurations that are the same as and overlap with the configurations of the first embodiment will be omitted.

A plurality of pumping grooves 312 and a plurality of the dynamic pressure grooves 13 are formed on a sliding surface 311 of a stationary seal ring 310 as one of the sliding components according to the third embodiment.

The pumping groove 312 includes a circumferential groove 315, the inclined groove 16, and an upstream inclined groove 316.

The upstream inclined groove 316 extends substantially linearly from an end portion of the circumferential groove 315 on the upstream side in the rotation direction of the rotating seal ring 20 toward the radial inner side while being inclined to the downstream side in the rotation direction of the rotating seal ring 20. In addition, a radial inner end 312h of the upstream inclined groove 316 is closed.

According to this configuration, the pumping groove 312 can generate positive pressure at the radial inner end 312h of the upstream inclined groove 316 and in the vicinity thereof. In such a manner, the radial inner end 312h functions as another pressure generation portion of the pumping groove 312.

In addition, the radial inner end 312h of the upstream inclined groove 316 is disposed on the radial inner side with respect to the bent portion 17. Therefore, one pumping groove 312 can generate positive pressure at a plurality of different positions in the radial direction.

Incidentally, in a fluid recovery groove in which pressure generation portions are provided at a plurality of locations, the pressure generation portions may be located at substantially the same position in the radial direction.

### {Fourth embodiment}

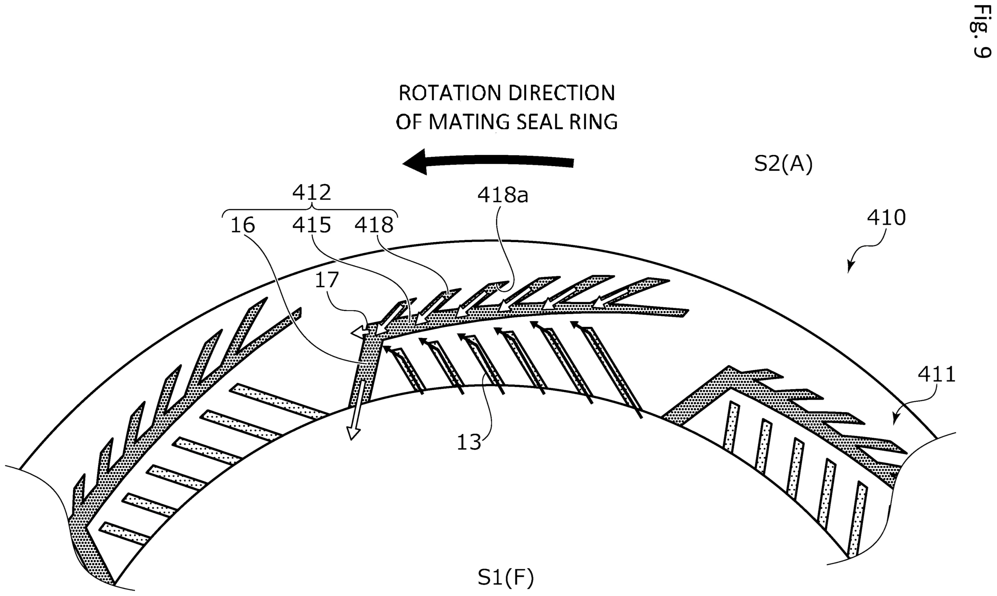

Next, sliding components according to a fourth embodiment of the present invention will be described with reference to FIG. 9. Incidentally, the description of configurations that are the same as and overlap with the configurations of the first embodiment will be omitted.

A plurality of pumping grooves 412 and a plurality of the dynamic pressure grooves 13 are formed on a sliding surface 411 of a stationary seal ring 410 as one of the sliding components according to the fourth embodiment.

The pumping groove 412 includes a circumferential groove 415, the inclined groove 16, and six radial outer side inclined grooves 418.

The radial outer side inclined grooves 418 communicate with the circumferential groove 415, and extend substantially linearly from the circumferential groove 415 toward the radial outer side while being inclined to the upstream side in the rotation direction of the rotating seal ring 20. In addition, a radial outer end 418a of each of the radial outer side inclined grooves 418 is closed. In addition, the depth of the radial outer side inclined grooves 418 is substantially constant, and is substantially the same as the depth of each of the circumferential groove 415 and the inclined groove 16.

Further, among the six radial outer side inclined grooves 418, the farther the radial outer side inclined groove 418 is located on the upstream side in the rotation direction of the rotating seal ring 20 with respect to an inclined groove 16 side of the pumping groove 412, the longer the dimension from the circumferential groove 415 to the radial outer end 418a of the radial outer side inclined groove 418 becomes.

Accordingly, the pumping groove 412 can also recover the sealed fluid F, which has moved further toward the radial outer side from the circumferential groove 415, using each of the radial outer side inclined grooves 418.

In addition, in the six radial outer side inclined grooves 418, the radial positions of the radial outer ends 418a are different. Therefore, the six radial outer side inclined grooves 418 can recover the sealed fluid F over a wider range.

### {Fifth embodiment}

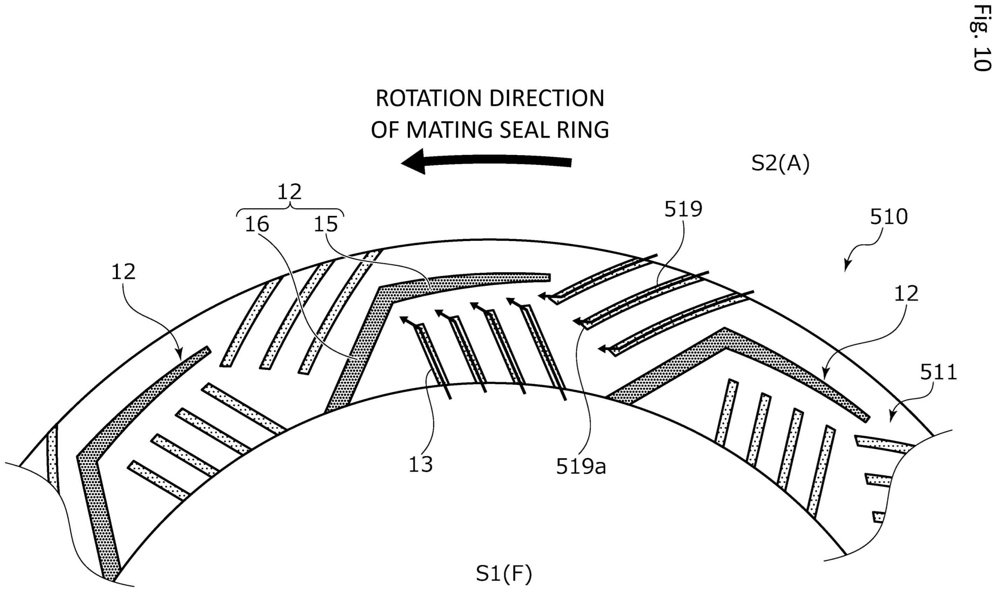

Next, sliding components according to a fifth embodiment of the present invention will be described with reference to FIG. 10. Incidentally, the description of configurations that are the same as and overlap with the configurations of the first embodiment will be omitted.

A plurality of the pumping grooves 12, a plurality of the dynamic pressure grooves 13, and a plurality of radial outer side dynamic pressure grooves 519 are formed on a sliding surface 511 of a stationary seal ring 510 as one of the sliding components according to the fifth embodiment.

The plurality of pumping grooves 12 are disposed such that the adjacent pumping grooves 12 are spaced apart from each other at predetermined intervals, compared to the first embodiment. One set of three radial outer side dynamic pressure grooves 519 is disposed between the pumping grooves 12 adjacent to each other.

The radial outer side dynamic pressure grooves 519 communicate with the outer space S2, and extend substantially linearly from the outer space S2 toward the radial inner side while being inclined to the downstream side in the rotation direction of the rotating seal ring 20. In addition, a radial inner end 519a of each of the radial outer side dynamic pressure grooves 519 is closed. In addition, the depth of the radial outer side dynamic pressure grooves 519 is substantially constant, and is substantially the same as the depth of each of the dynamic pressure grooves 13.

Further, among the three radial outer side dynamic pressure grooves 519, the farther the radial outer side dynamic pressure groove 519 is located on the upstream side in the rotation direction of the rotating seal ring 20 with respect to the downstream side, the longer the dimension from the radial outer end to the radial inner end 519a becomes.

Accordingly, the three radial outer side dynamic pressure grooves 519 can recover the sealed fluid F attempting to move to the outer space S2, so that positive pressure can be generated at the radial inner ends 519a and in the vicinities thereof.

In addition, in three radial outer side dynamic pressure grooves 519, the radial positions of the radial inner ends 519a are different. Therefore, the three radial outer side dynamic pressure grooves 519 can generate positive pressure at a plurality of different positions in the radial direction.

In such a manner, the sliding component of the present invention may be provided with grooves, dimples, or the like capable of generating dynamic pressure, in addition to the dynamic pressure generation grooves and the fluid recovery grooves.

### {Sixth embodiment}

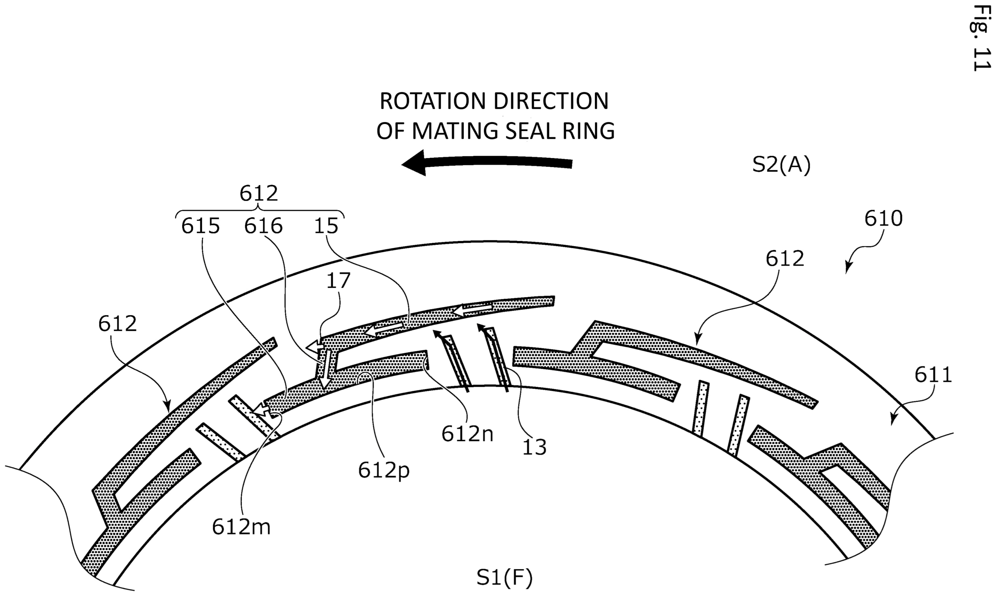

Next, sliding components according to a sixth embodiment of the present invention will be described with reference to FIG. 11. Incidentally, the description of configurations that are the same as and overlap with the configurations of the first embodiment will be omitted.

A plurality of pumping grooves 612 and a plurality of the dynamic pressure grooves 13 are formed on a sliding surface 611 of a stationary seal ring 610 as one of the sliding components according to the sixth embodiment.

The pumping groove 612 includes the circumferential groove 15, an inclined groove 616, and a radial inner side circumferential groove 615.

The radial inner side circumferential groove 615 extends in the circumferential direction, and a radial inner end of the inclined groove 616 communicates with a circumferential center of the radial inner side circumferential groove 615. In addition, an end portion 612m of the radial inner side circumferential groove 615 on the downstream side in the rotation direction of the rotating seal ring 20, an end portion 612n on the upstream side, and a radial inner end 612p of the radial inner side circumferential groove 615 are closed. In other words, the end portion 612m is a circumferential end portion of the pumping groove 612 on the downstream side in the relative rotation direction.

According to this configuration, the pumping groove 612 can generate positive pressure at the end portion 612m of the radial inner side circumferential groove 615 on the downstream side in the rotation direction of the rotating seal ring 20 and in the vicinity of the end portion 612m. In such a manner, the end portion 612m functions as another pressure generation portion of the pumping groove 612.

In addition, a relative negative pressure is generated in the radial inner side circumferential groove 615. The closer the location is to an end portion 612n side of the radial inner side circumferential groove 615 on the upstream side in the rotation direction of the rotating seal ring 20, the larger the negative pressure becomes. Accordingly, the radial inner side circumferential groove 615 can efficiently recover the sealed fluid F, particularly the sealed fluid F that has flowed into a gap between the sliding surfaces 611 and 21 from the dynamic pressure grooves 13 that the pumping groove 612 overlaps in the circumferential direction and the radial direction.

In addition, the end portion 612m of the radial inner side circumferential groove 615 on the downstream side in the rotation direction of the rotating seal ring 20 overlaps the circumferential groove 15 of the adjacent pumping groove 612 in the radial direction. Therefore, the sealed fluid F that has flowed into the gap between the sliding surfaces 611 and 21 from the end portion 612m and the vicinity thereof is recovered in the pumping groove 612 located on the downstream side in the rotation direction.

In addition, when the rotation direction of the rotating seal ring 20 is reversed, namely, when the rotating seal ring 20 that is a mating seal ring slides clockwise relative to the sliding surface 611, the radial inner side circumferential groove 615 can generate positive pressure at the end portion 612n on the upstream side in the rotation direction of the rotating seal ring 20 and in the vicinity thereof. The same applies to the circumferential groove 15.

Incidentally, the pumping groove 612 has been described as having a configuration in which the inclined groove 616 communicates with the circumferential center of the radial inner side circumferential groove 615; however, the present invention is not limited thereto, and the inclined groove may communicate with a portion of the radial inner side circumferential groove other than the circumferential center.

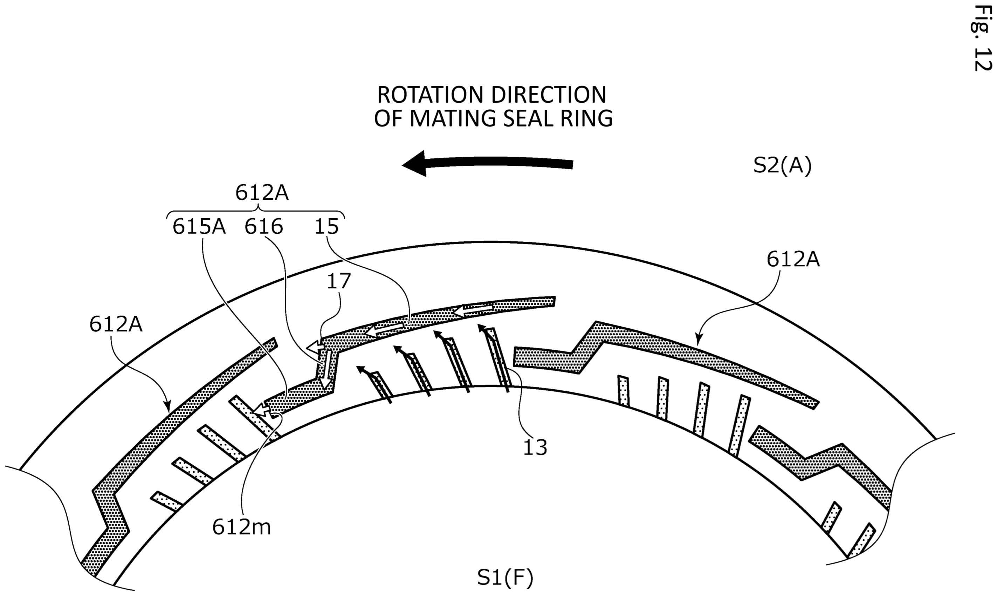

In addition, the configuration in which the pumping groove 612 extends toward the upstream side in the circumferential direction from the location where the radial inner side circumferential groove 615 communicates with the inclined groove 616; however, the present invention is not limited thereto, and as illustrated in FIG. 12 as a modification example, a pumping groove 612A may have a Z-shape, in other words, a crank shape.

In detail, an upstream end of a radial inner side circumferential groove 615A of the pumping groove 612A communicates with the radial inner end of the inclined groove 616. In other words, the pumping groove 612A is formed by omitting a portion of the radial inner side circumferential groove 615 of the above-described embodiment, the portion being located on the upstream side in the rotation direction with respect to the inclined groove 616. By forming the pumping groove 612A, a large number of the dynamic pressure grooves 13 can be provided.

### {Seventh embodiment}

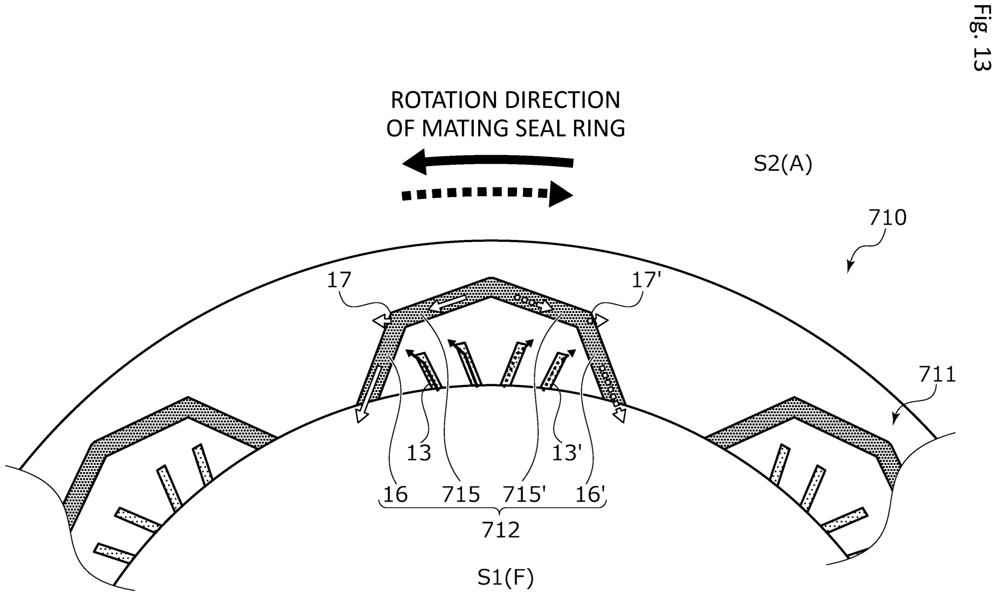

Next, sliding components according to a seventh embodiment of the present invention will be described with reference to FIG. 13. Incidentally, the description of configurations that are the same as and overlap with the configurations of the first embodiment will be omitted.

A plurality of pumping grooves 712, a plurality of the dynamic pressure grooves 13, and a plurality of reverse dynamic pressure grooves 13' are formed on a sliding surface 711 of a stationary seal ring 710 as one of the sliding components according to the seventh embodiment.

The pumping groove 712 includes a circumferential groove 715, the inclined groove 16, a reverse circumferential groove 715', and a reverse inclined groove 16'.

Two reverse dynamic pressure grooves 13' overlapping one pumping groove 712 in the radial direction and the circumferential direction, the reverse circumferential groove 715', and the reverse inclined groove 16' have a shape obtained by inverting two dynamic pressure grooves 13, the circumferential groove 715, and the inclined groove 16 in the circumferential direction with an upstream end of the circumferential groove 715 in the rotation direction of the rotating seal ring 20 as a boundary. In addition, the upstream end of the circumferential groove 715 in the rotation direction of the rotating seal ring 20 and a downstream end of the reverse circumferential groove 715' in the rotation direction of the rotating seal ring 20 communicate with each other.

Accordingly, as illustrated by solid arrows, when the rotating seal ring 20 slides counterclockwise relative to the sliding surface 711, positive pressure is generated at the bent portion 17 between the circumferential groove 715 and the inclined groove 16 and in the vicinity thereof. In addition, the sealed fluid F is discharged from the inclined groove 16 into the inner space S1.

Meanwhile, as illustrated by dashed arrows, when the rotating seal ring 20 slides clockwise relative to the sliding surface 711, positive pressure is generated at a bent portion 17' between the reverse circumferential groove 715' and the reverse inclined groove 16' and in the vicinity thereof. In addition, the sealed fluid F is discharged from the reverse inclined groove 16' into the inner space S1.

In such a manner, by forming the dynamic pressure groove and the fluid recovery groove in a circumferentially symmetrical shape, positive pressure generation and fluid recovery can be achieved regardless of whether the rotation direction is one direction or the other direction. In addition, as long as positive pressure generation and fluid recovery can be achieved both on one side and the other side in the rotation direction, the shape of the dynamic pressure groove or the fluid recovery groove that achieves positive pressure generation or fluid recovery on the one side in the rotation direction may be different from the shape of the dynamic pressure groove or the fluid recovery groove that achieve positive pressure generation or fluid recovery in the other side in the rotation direction. Namely, the shape may not be symmetrical.

### {Eighth embodiment}

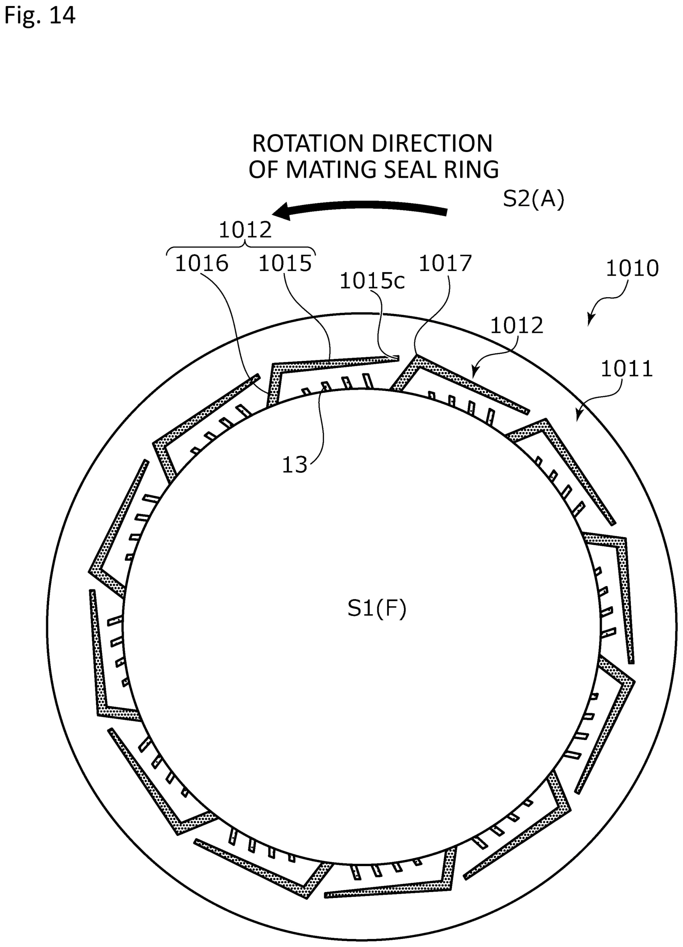

Next, sliding components according to an eighth embodiment of the present invention will be described with reference to FIG. 14. Incidentally, the description of configurations that are the same as and overlap with the configurations of the first embodiment will be omitted.

A plurality of pumping grooves 1012 and a plurality of the dynamic pressure grooves 13 are formed on a sliding surface 1011 of a stationary seal ring 1010 as one of the sliding components according to the eighth embodiment.

An end 1015c of each of circumferential grooves 1015 on the upstream side in the rotation direction of the rotating seal ring 20 overlaps, in the circumferential direction, a bent portion 1017 of the adjacent pumping groove 1012 on the upstream side in the rotation direction of the rotating seal ring 20.

In addition, each of the circumferential grooves 1015 extends linearly. Therefore, one dodecagonal shape is drawn by extending each of the circumferential grooves 1015 in the circumferential direction. Incidentally, the number of the circumferential grooves 1015 may be a number other than 12, and in that case, one polygonal shape having that number of sides is drawn.

According to this configuration, the pumping groove 1012 can efficiently recover the sealed fluid F that has flowed into a gap between the sliding surfaces 1011 and 21 from the bent portion 1017 of the adjacent pumping groove 1012 on the upstream side in the rotation direction of the rotating seal ring 20.

### {Ninth embodiment}

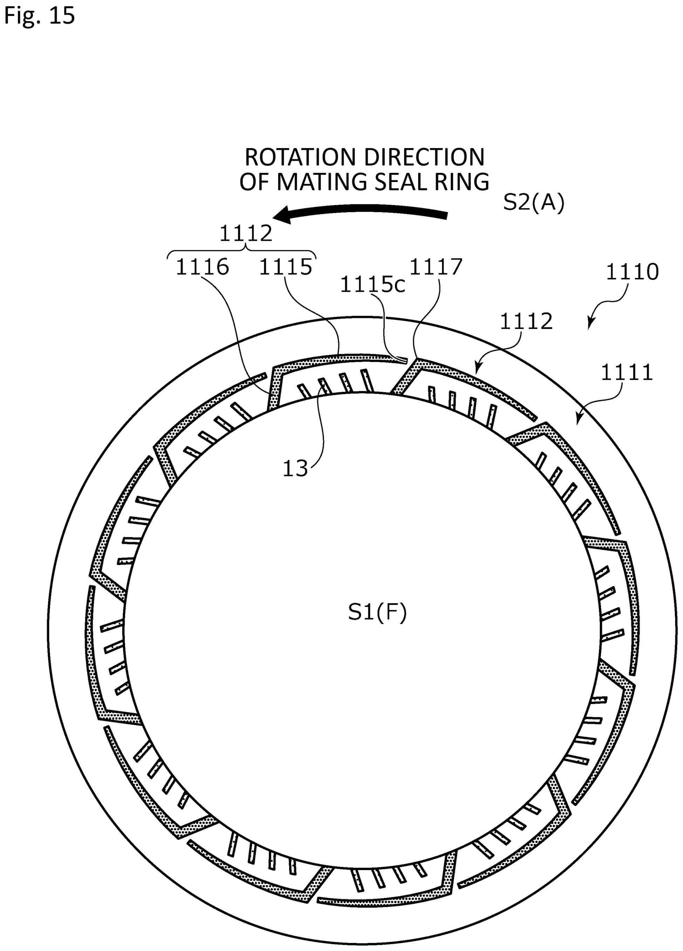

Next, sliding components according to a ninth embodiment of the present invention will be described with reference to FIG. 15. Incidentally, the description of configurations that are the same as and overlap with the configurations of the first embodiment will be omitted.

A plurality of pumping grooves 1112 and a plurality of the dynamic pressure grooves 13 are formed on a sliding surface 1111 of a stationary seal ring 1110 as one of the sliding components according to the ninth embodiment.

Circumferential grooves 1115 of the pumping grooves 1112 are formed in an arc shape with the same curvature, and are disposed on the same circumference. In addition, the curvature of each of the circumferential grooves 1115 is substantially the same as the curvature of the stationary seal ring 1110. In addition, one circle is drawn by extending each of the circumferential grooves 1115 in the circumferential direction.

In addition, an upstream end 1115c of each of the circumferential grooves 1115 on the upstream side in the rotation direction of the rotating seal ring 20 overlaps, in the circumferential direction, a bent portion 1117 of the adjacent pumping groove 1112 on the upstream side in the rotation direction of the rotating seal ring 20.

According to this configuration, the circumferential groove 1115 can guide the sealed fluid F along the rotation direction. In addition, the sealed fluid F that has flowed into a gap between the sliding surfaces 1111 and 21 from the bent portion 1117 of the adjacent pumping groove 1112 on the upstream side in the rotation direction of the rotating seal ring 20 is also easily moved along the rotation direction. Accordingly, the stationary seal ring 1110 can evenly recover the sealed fluid F.

### {Tenth embodiment}

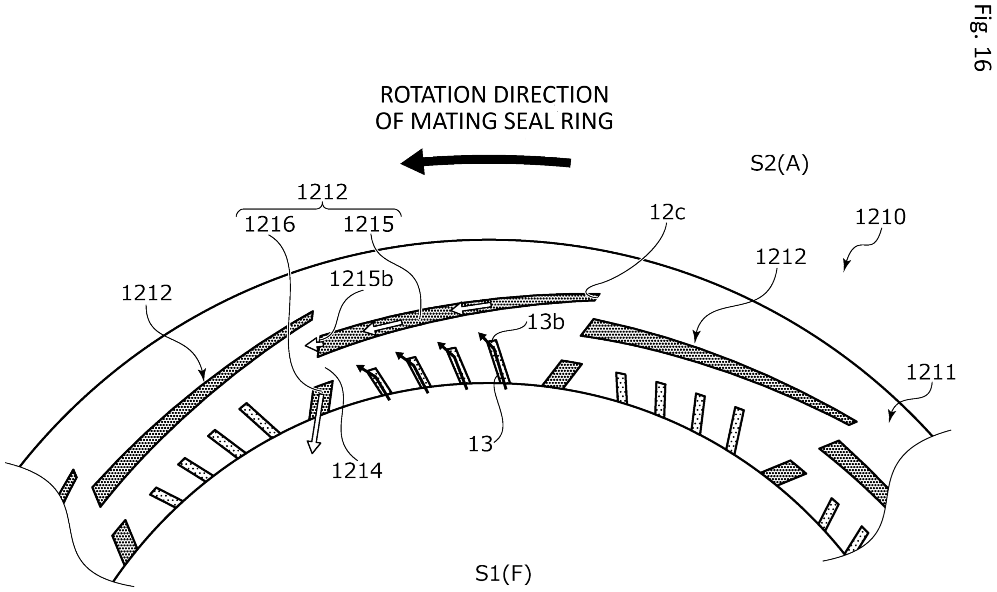

Next, sliding components according to a tenth embodiment of the present invention will be described with reference to FIG. 16. Incidentally, the description of configurations that are the same as and overlap with the configurations of the first embodiment will be omitted.

A plurality of pumping grooves 1212 serving as fluid recovery grooves and a plurality of the dynamic pressure grooves 13 are formed on a sliding surface 1211 of a stationary seal ring 1210 as one of the sliding components according to the tenth embodiment.

A circumferential groove 1215 and an inclined groove 1216 of the pumping groove 1212 are partitioned off from each other in the radial direction by a land 1214. Namely, the circumferential groove 1215 and the inclined groove 1216 do not communicate with each other. In other words, an end portion 1215m is a circumferential end portion of the pumping groove 1212 on the downstream side in the relative rotation direction. Incidentally, from the viewpoint of fluid recovery, it is preferable that a separation distance between the circumferential groove 1215 and the inclined groove 1216 is less than or equal to a separation distance between the circumferential groove 1215 and the dynamic pressure groove 13.

According to this configuration, positive pressure can be generated at an end portion 1215b of the circumferential groove 1215 and in the vicinity thereof, the end portion 1215b serving as a pressure generation portion and being located on the downstream side in the relative rotation of the rotating seal ring 20, and a part of the fluid that has flowed into a gap between the sliding surfaces from the end portion 1215b can be recovered by the inclined groove 1216. In addition, another part of the fluid that has flowed into the gap between the sliding surfaces from the end portion 1215b is recovered by the circumferential groove 1215 of the pumping groove 1212 on the downstream side in the relative rotation.

### {Eleventh embodiment}

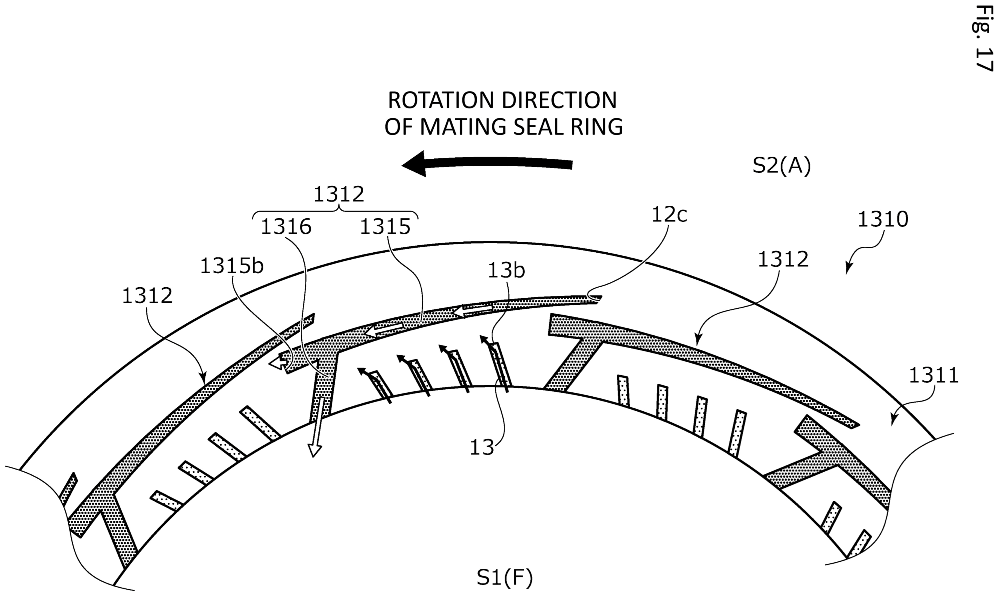

Next, sliding components according to an eleventh embodiment of the present invention will be described with reference to FIG. 17. Incidentally, the description of configurations that are the same as and overlap with the configurations of the first embodiment will be omitted.

A plurality of pumping grooves 1312 and a plurality of the dynamic pressure grooves 13 are formed on a sliding surface 1311 of a stationary seal ring 1310 as one of the sliding components according to the eleventh embodiment.

The pumping groove 1312 communicates with an inclined groove 1316 at a position away to the upstream side from an end portion 1315b of a circumferential groove 1315, the end portion 1315b serving as a pressure generation portion and being located on the downstream side in the relative rotation of the rotating seal ring 20. The end portion 1315b is a circumferential end portion of the pumping groove 1312 on the downstream side in the relative rotation direction.

According to this configuration, positive pressure can be generated at the end portion 1315b of the circumferential groove 1315 and in the vicinity thereof. In addition, another part of the fluid that has flowed into a gap between the sliding surfaces from the end portion 1315b is recovered by the circumferential groove 1315 of the pumping groove 1312 on the downstream side in the relative rotation.

### {Twelfth embodiment}

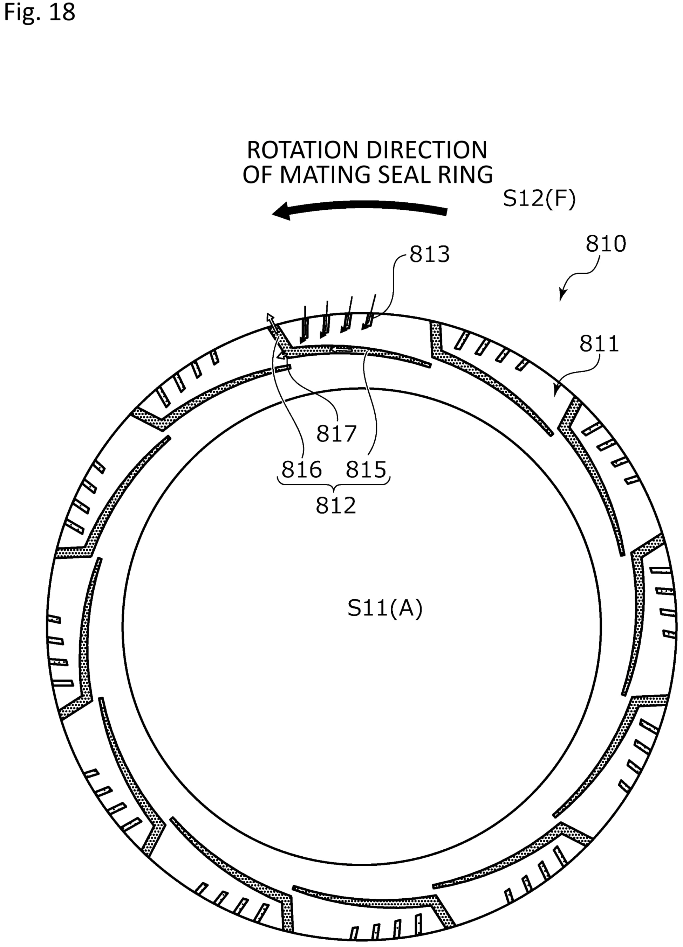

Next, sliding components according to a twelfth embodiment of the present invention will be described with reference to FIG. 18. Incidentally, the description of configurations that are the same as and overlap with the configurations of the first embodiment will be omitted.

A mechanical seal to which a stationary seal ring 810 as one of the sliding components according to the twelfth embodiment is applied is an inside mechanical seal that seals the sealed fluid F existing on an outer space S12 side of sliding surfaces 811 and 21, and that allows an inner space S11 to communicate with the atmosphere A.

A plurality of pumping grooves 812 and a plurality of dynamic pressure grooves 813 are formed on the sliding surface 811.

The pumping groove 812 includes a circumferential groove 815 and an inclined groove 816.

The inclined groove 816 has a shape obtained by substantially inverting the inclined groove 16 of the first embodiment in the radial direction, and communicates with the circumferential groove 815. The dynamic pressure groove 813 is formed by substantially inverting the dynamic pressure groove 13 of the first embodiment in the radial direction, and communicates with an outer space S12.

Accordingly, as illustrated by hollow arrows in FIG. 18, due to the rotation of the rotating seal ring 20, positive pressure is generated at a radial inner end of the dynamic pressure groove 813 and in the vicinity thereof. In addition, positive pressure is generated at a bent portion 817 between the circumferential groove 815 and the inclined groove 816 and in the vicinity thereof. Further, the sealed fluid F is discharged from the inclined groove 816 into the outer space S12.

In such a manner, the sliding components of the present invention may be applied to an environment in which the sealed fluid space is located on the radial outer side of the sliding surfaces and the leakage-side space is located on the radial inner side of the sliding surfaces.

### {Thirteenth embodiment}

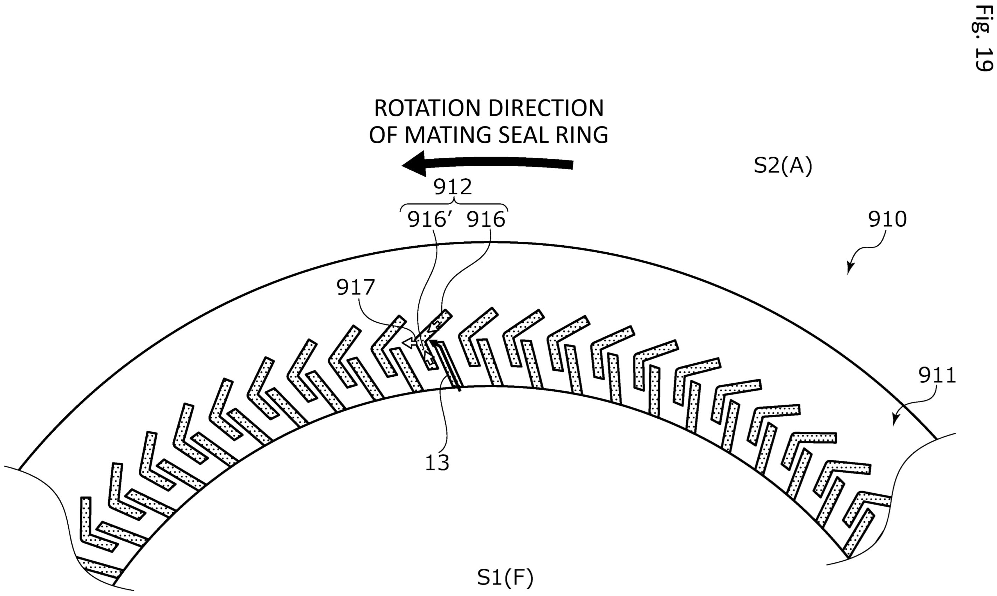

Next, sliding components according to a thirteenth embodiment of the present invention will be described with reference to FIG. 19. Incidentally, the description of configurations that are the same as and overlap with the configurations of the first embodiment will be omitted.

A plurality of pumping grooves 912 and a plurality of the dynamic pressure grooves 13 are formed on a sliding surface 911 of a stationary seal ring 910 as one of the sliding components according to the thirteenth embodiment.

The pumping groove 912 includes an inclined groove 916 serving as a first groove portion, and a reverse inclined groove 916' serving as a second groove portion.

The reverse inclined groove 916' has a shape obtained by inverting, in the radial direction, a downstream end of the inclined groove 916 in the rotation direction of the rotating seal ring 20. In addition, a downstream end of the reverse inclined groove 916' in the rotation direction, namely, a radial outer end of the reverse inclined groove 916' communicates with the downstream end of the inclined groove 916 in the rotation direction, namely, a radial inner end of the inclined groove 916. The pumping groove 912 is a groove having a substantially L-shape with an obtuse intersection angle.

In addition, the inclined groove 916 is disposed on the radial outer side with respect to one dynamic pressure groove 13, and overlaps the one dynamic pressure groove 13 in the radial direction and the circumferential direction.

Accordingly, when the rotating seal ring 20 rotates, as illustrated by hollow arrows in FIG. 19, the sealed fluid F in the inclined groove 916 moves in accordance with the rotation direction of the rotating seal ring 20 due to shear with the sliding surface 21, and is guided to a bent portion 917 between the inclined groove 916 and the reverse inclined groove 916' along the inclined groove 916.

Similarly, the sealed fluid F in the reverse inclined groove 916' is also guided to the bent portion 917 along the reverse inclined groove 916'.

Then, the sealed fluid F flows into a gap between the sliding surfaces 911 and 21 from the bent portion 917 and the vicinity thereof, so that positive pressure is generated. In such a manner, the bent portion 917 functions as a pressure generation portion of the pumping groove 912. In other words, the bent portion 917 is a bent end portion of the pumping groove 912 on the downstream side in the relative rotation direction.

In addition, a relative negative pressure is generated in the inclined groove 916 and in the reverse inclined groove 916'. The closer the location is to the upstream side in the rotation direction of the rotating seal ring 20, the larger the negative pressure becomes. Therefore, the pumping groove 912 can efficiently recover the sealed fluid F, particularly the sealed fluid F that has flowed into the gap between the sliding surfaces 911 and 21 from the dynamic pressure groove 13 that the pumping groove 912 overlaps in the circumferential direction and the radial direction.

Incidentally, the groove having a substantially L-shape and composed of the inclined groove and the reverse inclined groove as in the present embodiment may extend in the circumferential direction continuously with the circumferential groove 15 of the first embodiment, or may be continuous with the inclined groove 16 of the first embodiment, and communicate with the inner space S1.

In addition, in the present embodiment, an example in which the bent groove has a shape with a bent angle; however, the present invention is not limited thereto, and the bent groove may have a shape including a curved portion with a large curvature.

In addition, in the present embodiment, one pressure generation portion has been described as being composed of one inclined groove and one reverse inclined groove; however, the present invention is not limited thereto, and for example, a plurality of the inclined grooves and a plurality of the reverse inclined grooves may be alternately disposed to form pressure generation portions at a plurality of locations.

The embodiments of the present invention have been described above with reference to the drawings; however, specific configurations are not limited to these embodiments, and modifications or additions that are made without departing from the scope of the present invention are also included in the present invention.

For example, in the first to thirteenth embodiments, the mechanical seal has been described as an example of the sliding components; however, the present invention is not limited thereto, and the sliding components may be sliding components other than the mechanical seal, such as a slide bearing.

In addition, in the first to thirteenth embodiments, the sealed fluid has been described as a high-pressure liquid; however, the present invention is not limited thereto, and the sealed fluid may be a gas or a low-pressure liquid or may be a mist mixture of liquid and gas.

In addition, in the first to thirteenth embodiments, the fluid on the leakage space side has been described as the atmosphere that is a low-pressure gas; however, the present invention is not limited thereto, and the fluid may be a liquid or a high-pressure gas or may be a mist mixture of liquid and gas.

In addition, in the first to thirteenth embodiments, the sealed fluid space side and the leakage space side have been described as a high-pressure side and a low-pressure side, respectively; however, the sealed fluid space side and the leakage space side may be a low-pressure side and a high-pressure side, respectively, or the sealed fluid space side and the leakage space side may have substantially the same pressure.

In addition, in the first to thirteenth embodiments, an example in which the dynamic pressure generation grooves and the fluid recovery grooves are provided in the stationary seal ring has been described; however, the dynamic pressure generation grooves and the fluid recovery grooves may be provided in the rotating seal ring.

In addition, in the first to twelfth embodiments, a configuration in which the width of the circumferential groove is increased as the circumferential groove extends from the upstream side toward the downstream side in the rotation direction of the rotating seal ring has been described; however, the present invention is not limited thereto, and the width may be constant or may be reduced, and the shape of the circumferential groove may be changed as appropriate.

### {REFERENCE SIGNS LIST}

10 Stationary seal ring (sliding component)
11 Sliding surface
12 Pumping groove (fluid recovery groove)
13 Dynamic pressure groove (dynamic pressure generation groove)
15 Circumferential groove (first groove portion)
16 Inclined groove (second groove portion)
17 Bent portion (pressure generation portion)
20 Rotating seal ring (sliding component)
21 Sliding surface
110A, 110B Stationary seal ring
111A, 111B Sliding surface
112 Pumping groove (fluid recovery groove)
113 Dynamic pressure groove (dynamic pressure generation groove)
210 to 1310 Stationary seal ring
211 to 1311 Sliding surface
212 to 412, 612 to 1112, 1312 Pumping groove (fluid recovery groove)
315, 415, 715, 815, 1015 to 1315 Circumferential groove (first groove portion)
116, 416, 616, 816 to 1316 Inclined groove (second groove portion)
216, 216A Curved inclined groove (second groove portion)
217, 217A, 817 to 1117 Bent portion (pressure generation portion)
1212 Pumping groove (fluid recovery groove)
1215b, 1315b End portion (pressure generation portion)
13' Reverse dynamic pressure groove
16' Reverse inclined groove (second groove portion)
17' Bent portion (pressure generation portion)
813 Dynamic pressure groove (dynamic pressure generation groove)
916' Reverse inclined groove (second groove portion)
A Atmosphere (fluid on leakage space side)
F Sealed fluid
S1, S11 Inner space
S2, S12 Outer space

## Claims

1. Sliding components of which a pair of sliding surfaces rotate relative to each other and which partition a sealed fluid space and a leakage space off from each other,
wherein at least one of the sliding surfaces is provided with a dynamic pressure generation groove and a fluid recovery groove including a pressure generation portion that is a circumferential end portion, a curved portion, or a bent portion on a downstream side in a relative rotation direction, and
the fluid recovery groove includes a first groove portion overlapping the dynamic pressure generation groove in a radial direction on a leakage space side of the dynamic pressure generation groove, and a second groove portion overlapping the dynamic pressure generation groove in a circumferential direction on the downstream side of the dynamic pressure generation groove in the relative rotation.

2. The sliding components according to claim 1,
wherein the pressure generation portion is a bent portion formed between the first groove portion and the second groove portion curved or bent from the first groove portion and extending toward a sealed fluid space side in the radial direction.

3. The sliding components according to claim 1,
wherein the fluid recovery groove overlaps a plurality of the dynamic pressure generation grooves in the radial direction.

4. The sliding components according to claim 1,
wherein the second groove portion is inclined in a direction opposite to the dynamic pressure generation groove from the sealed fluid space to the leakage space.

5. The sliding components according to claim 2,
wherein an upstream end of the first groove portion of the fluid recovery groove and the bent portion of an adjacent fluid recovery groove on an upstream side in the relative rotation overlap each other in the circumferential direction.

6. The sliding components according to claim 2,
wherein the adjacent first groove portions are aligned in one circle line.

7. The sliding components according to claim 1,
wherein the first groove portion of the fluid recovery groove and the second groove portion of an adjacent fluid recovery groove on an upstream side in the relative rotation overlap each other in the radial direction, and
the dynamic pressure generation groove is surrounded by the fluid recovery groove and the second groove portion of the adjacent fluid recovery groove on the upstream side in the relative rotation.
